(19) Europäisches Patentamt
European Patent Office
Office européen des brevets

(11) Publication number: **0 110 490**
**B1**

(12) **EUROPEAN PATENT SPECIFICATION**

(45) Date of publication of patent specification: **03.12.86**

(51) Int. Cl.$^4$: **C 01 F 7/02**

(21) Application number: **83300672.9**

(22) Date of filing: **10.02.83**

(54) **A method for producing fine spinel powders.**

(30) Priority: **21.10.82 JP 184817/82**

(43) Date of publication of application:
**13.06.84 Bulletin 84/24**

(45) Publication of the grant of the patent:
**03.12.86 Bulletin 86/49**

(84) Designated Contracting States:
**DE FR GB**

(56) References cited:
**US-A-3 510 272**
**US-A-3 786 137**

(73) Proprietor: **NGK INSULATORS, LTD.**
**2-56, Suda-chō, Mizuho-ku**
**Nagoya-shi, Aichi 467 (JP)**

(72) Inventor: **Matsui, Minoru**
**193, Aza-Imonoshihora Ohaza-Kamiyashiro**
**Idaka-Cho, meito-Ku Nagoya-City (JP)**
Inventor: **Takahashi, Tomonori**
**34 Takemi-Cho, 1-chome**
**Mizuho-Ku Nagoya-City (JP)**

(74) Representative: **Paget, Hugh Charles Edward et al**
**MEWBURN ELLIS & CO. 2/3 Cursitor Street**
**London EC4A 1BQ (GB)**

**EP 0 110 490 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a method for producing fine spinel powders.

The fine powders consisting of a single phase of spinel solid solution of aluminum and magnesium oxides of the following general formula

$$MgO \cdot xAl_2O_3$$

wherein x is 1—1.5, are useful as the raw material for producing dense and uniform spinel sintered bodies, such as transparent spinel sintered bodies and the like.

The following methods have been proposed for producing such fine spinel powders:

(1) the spinel is produced by the solid phase reaction of aluminum oxide with magnesium oxide and the spinel so formed is pulverised,

(2) a mixture of an aluminum salt and a magnesium salt is subjected to pyrolysis.

(3) the pH of an aqueous solution of an aluminum salt and a magnesium salt is adjusted to cause co-precipitation.

However, the method (1) of the solid phase reaction tends to result in unevenness in the composition of the phase formed and it is difficult to obtain the fine powders having a uniform composition. Furthermore, the activity of the particles is lowered by the treatment at a high temperature and the sintering of the powders formed is difficult.

The method (2) of decomposition of salts has the drawback that anions remain as an impurity in the fine powder formed.

The method (3) of co-precipitation has the drawbacks that the adjustment of pH is difficult and that it is impossible accurately to control the composition of the product.

It is known, in the sintering of spinel, to add a small amount of LiF in order to promote the densification at a low temperature, but the addition and dispersion of LiF has been heretofore carried out by mixing by means of a ballmill, which means that the dispersion cannot be satisfactorily effected and nonuniformity arises in the sintered body.

The method of the present invention is intended to avoid or reduce these drawbacks of the prior art.

The present invention lies in a method for producing a fine spinel powder in which 1 mole of magnesium alkoxide of the general formula

$$Mg(OR)_2,$$

wherein R is an alkyl group having 1 to 3 carbon atoms, and 2 to 3 moles of aluminum alkoxide of the general formula

$$Al(OR')_3,$$

wherein R' is an alkyl group having 1 to 3 carbon atoms, are dissolved in an alcohol of the general formula

$$R''OH,$$

wherein R'' is an alkyl group having 1 to 3 carbon atoms, the sum of the concentrations of aluminium alkoxide and magnesium alkoxide dissolved in the alcohol being not greater than 0.2 mol/l, the solution is subjected to hydrolysis, and the precipitate formed by hydrolysis is heated to form a fine powder of a spinel solid solution of oxides. Mixtures of the above-mentioned magnesium alkoxides, aluminum alkoxides and alcohols may be used.

By the invention, fine spinel powders of high purity can be produced.

A typical process of the present invention will now be explained in more detail. 1 mole of magnesium alkoxide of the general formula $Mg(OR)_2$ obtained by reacting metallic magnesium with an alcohol, for example, magnesium methoxide, magnesium ethoxide, magnesium isopropoxide and the like and 2—3 moles of aluminum alkoxide of the general formula $Al(OR')_3$ obtained by reacting metallic aluminum with an alcohol, for example, aluminum methoxide, aluminum ethoxide, aluminum isopropoxide and the like are thoroughly dissolved by reflux in an alcohol of the general formula R''OH, such as methanol, ethanol, isopropanol and the like. In this case, it is essential that the number of carbon atoms in each of the alkyl groups in the aluminum alkoxide, the magnesium alkoxide, and the alcohol is 1 to 3. This is because if alkoxides or alcohols having 4 or more carbon atoms are used, water dissolves with difficulty in the alcohol of the solvent and the alcohol generated from the hydrolysis of the alkoxides is not dispersed in the alcohol solution in a short time upon the hydrolysis, so that regions where water is in excess and regions where water is deficient are formed locally and the properties of the hydrolyzed products are non-uniform. Consequently, uniform fine spinel powders cannot be obtained.

Furthermore, it is essential that the molar ratio of magnesium alkoxide to aluminum alkoxide is 1:2—3. When aluminum alkoxide is present as less than 2 moles based on 1 mole of magnesium alkoxide, the periclase·structure tends to be precipitated as well as the spinel structure, while when the amount of aluminum alkoxide exceeds 3 moles, alumina is precipitated in addition to the spinel and a fine powder of a single phase solid solution of the spinel oxide cannot be obtained. When the alcohol solution is prepared, the sum of the concentration of aluminum alkoxide and magnesium alkoxide is not greater than 0.2 mol/l. If this concentration sum is higher than 0.2 mol/l, the alkoxide molecules are readily polymerized in the solution and the mixture of aluminum alkoxide and magnesium alkoxide in the solution is not uniform. Then, even if hydrolysis is effected, a uniform fine spinel powder may not be

obtained. Aluminum alkoxides and magnesium alkoxides may of course be previously synthesized, but the synthesis and dissolution of the alkoxides may be concurrently carried out by adding metallic aluminum and magnesium alkoxide or metallic magnesium and aluminum alkoxide into an alcohol. In this case, an unreacted portion or undissolved portion may remain so that the composition ratio of aluminum alkoxide and magnesium alkoxide in the alcohol solution may not be known but, if so, the concentration of aluminum and magnesium can be analyzed and the molar ratio adjusted to the desired value.

Then, to the alcohol solution of magnesium alkoxide and aluminum alkoxide thus obtained there is added water and the mixture is preferably heated at or near the boiling point of alcohol to hydrolyze the alkoxides in a vessel equipped with a reflux apparatus. The hydrolysis follows the following formulae (1).

$$Mg(OR)_2+2H_2O=Mg(OH)_2+2ROH \quad (1)$$
$$Al(OR')_3+3H_2O=Al(OH)_3+3R'OH$$

As the above formulae (1) shows, it is most preferable that water provided for the hydrolysis is a molar amount corresponding to the sum of three times the mole number of the aluminum alkoxide and twice the mole number of the magnesium alkoxide. This is because, when the hydrolysis is effected by adding water in excess of this amount, hydroxides formed by the excess amount of water are dissolved, and when the amount of water is less than this amount, non-precipitated aluminum and magnesium components which are not hydrolyzed, are generated and the composition of the fine spinel powder deviates from the desired composition ratio.

The water used in the hydrolysis is preferably diluted with the same kind of alcohol as forms the solvent for preparing the alcohol solution of the alkoxides, the amount of alcohol used for dilution of the water being preferably 10 times as much as the water in order to produce a uniform precipitate of hydroxides without forming regions where water is locally excessive.

To produce fine spinel powders in which LiF is uniformly dispersed, it is preferred that LiF is dissolved in the water used for the hydrolysis and that this aqueous solution of LiF is diluted with the same kind of alcohol as forms the solvent as mentioned above.

The precipitate of hydroxides obtained by the hydrolysis is typically separated from the alcohol by filtration or the like and dried and heated to crystallize the hydroxides. The drying is preferably effected at a temperature of not higher than 120°C because when drying is effected at above 120°C, the alcohol adhering to the hydroxides tends to be carbonized and the carbon remains in the fine spinel powder as an impurity. The subsequent heating is preferably effected at a temperature of higher than 700°C and lower than 1,200°C in an oxidizing atmosphere. This is because, with a non-oxidizing atmosphere, the alcohol deposited on the hydroxides is carbonized and the carbon may remain in the fine spinel powder as an impurity. The hydroxides obtained through drying are amorphous and are completely dehydrated at 500°C. The spinel is crystallized at 700°C. Therefore, the heating should preferably be effected at a temperature of not lower than 700°C, otherwise a spinel oxide fine powder may not be obtained. When the heating is effected at a temperature of higher than 1,200°C, the particles tend to grow and the fine powder suitable as a raw material for producing a sintered body may not be obtained. The purity of the spinel powders obtained by the method of the present invention may be higher than 99.9%.

The following examples are given for the purpose of illustration of this invention and are not intended as limitations thereof. Such comparative examples are also given.

Examples

Magnesium alkoxides and aluminum alkoxides as set out in the following Table 1 were mixed in the molar ratios and the concentration sums set out in Table 1 and dissolved in the alcohols specified in Table 1 using a vessel equipped with a reflux apparatus. To the alcohol solution so formed there was added a solution composed of one volume part of water and ten volume parts of the same alcohol in which in some cases LiF is dissolved as set out in Table 1.

The hydroxides obtained were filtered and dried at 110°C. They were then heated under the conditions described in Table 1 to obtain spinel powders Nos. 1—10 according to the present invention.

The crystal phase, specific surface area, purity and the like were measured for the fine spinel powders so obtained and are compared with those of the prior art samples (Nos. 11 and 12) in Table 1.

TABLE 1(a)

| No. | Aluminum alkoxides | Magnesium alkoxides | Al/Mg (molar ratio) | Sum of concentration (mol/l) | Alcohol | LiF (wt%) | Temperature in hydrolysis (°C) | Heating condition | | Properties of powders | | |
|---|---|---|---|---|---|---|---|---|---|---|---|---|
| | | | | | | | | Temperature (°C) | Time (h) | Crystal phase | Specific surface area ($m^2/g$) | Impurity (ppm) |
| 1 | Aluminum methoxide | Magnesium methoxide | 2 | 0.1 | Methanol | — | 65 | 800 | 24 | Spinel | 80 | — |
| 2 | Aluminum methoxide | Magnesium methoxide | 2.2 | 0.1 | Methanol | 0.1 | 65 | 800 | 24 | Spinel | 88 | — |
| 3 | Aluminum ethoxide | Magnesium methoxide | 2.2 | 0.05 | Ethanol | — | 78 | 800 | 24 | Spinel | 72 | — |
| 4 | Aluminum ethoxide | Magnesium ethoxide | 2.2 | 0.1 | Ethanol | — | 78 | 800 | 24 | Spinel | 66 | — |
| 5 | Aluminum isopropoxide | Magnesium methoxide | 2.2 | 0.1 | Isopropanol | 0.1 | 83 | 800 | 24 | Spinel | 80 | — |
| 6 | Aluminum isopropoxide | Magnesium isopropoxide | 2.1 | 0.2 | Isopropanol | 0.1 | 83 | 1,000 | 12 | Spinel | 73 | Si: 75, Fe: 142, Na: 148 |
| 7 | Aluminum isopropoxide | Magnesium isopropoxide | 2.1 | 0.2 | Isopropanol | 0.1 | 25 | 1,000 | 12 | Spinel | 65 | — |

TABLE 1(b)

| No. | Aluminum alkoxides | Magnesium alkoxides | Al/Mg (molar ratio) | Sum of concentration (mol/l) | Alcohol | LiF (wt%) | Temperature in hydrolysis (°C) | Heating condition | | Properties of powders | | |
|---|---|---|---|---|---|---|---|---|---|---|---|---|
| | | | | | | | | Temperature (°C) | Time (h) | Crystal phase | Specific surface area ($m^2/g$) | Impurity (ppm) |
| 8 | Aluminum isopropoxide | Magnesium isopropoxide | 2.1 | 0.2 | Isopropanol | — | 83 | 1,000 | 12 | Spinel | 72 | Si: 83, Fe: 142, Na: 148 |
| 9 | Aluminum isopropoxide | Magnesium isopropoxide | 3.0 | 0.2 | Isopropanol | 0.1 | 83 | 1,000 | 12 | Spinel | 95 | — |
| 10 | Aluminum isopropoxide | Magnesium isopropoxide | 3.0 | 0.2 | Isopropanol | — | 83 | 1,000 | 12 | Spinel | 93 | — |
| 11 | Pyrolysis of salt | | 2.1 | | | | | 1,000 | 12 | Spinel Periclase | 55 | Si: 47, S: 700, Fe: 142, Na: 297, Ca: 71, K: 166 |
| 12 | Pyrolysis of salt | | 3.0 | | | | | 1,000 | 12 | Spinel Periclase Corundum | 83 | — |

As can be seen from the results in Table 1, in the fine spinel powders obtained by the method according to the present invention, the crystal phase is the spinel single phase and the specific surface area is larger by 15—55% than that of the prior art samples. Furthermore, no impurities are contained in the fine powders formed or the content of impurities is very low.

Thus, to summarize, the method of the present invention for producing fine spinel powders can provide the fine spinel powders having a crystal phase consisting of a single spinel phase, a large specific surface area and high purity by hydrolyzing an alcohol solution of the specifically defined magnesium alkoxide and aluminum alkoxide in a specific mixing ratio. The fine spinel powders obtained can be used as the raw materials for producing spinel sintered bodies, such as transparent spinel sintered bodies. Thus, this invention can provide fine spinel powders which are very useful as the raw material for ceramics.

**Claims**

1. A method for producing a fine spinel powder which comprises (i) dissolving 1 mole of magnesium alkoxide given by the general formula,

$$Mg(OR)_2$$

wherein R is an alkyl group having 1 to 3 carbon atoms, and 2 to 3 moles of aluminum alkoxide given by the general formula

$$Al(OR')_3$$

wherein R' is an alkyl group having 1 to 3 carbon atoms, in an alcohol given by the general formula

$$R''OH$$

wherein R'' is an alkyl group having 1 to 3 carbon atoms, the sum of the concentrations of aluminum alkoxide and magnesium alkoxide dissolved in the alcohol being not greater than 0.2 mol/l, (ii) subjecting the solution thus obtained to hydrolysis and (iii) heating the precipitate formed by the hydrolysis to form a fine powder consisting of a spinel solid solution of oxides of aluminum and magnesium.

2. A method as claimed in claim 1 wherein the hydrolysis is carried out in the presence of LiF.

3. A method as claimed in either one of claims 1 to 3, wherein the hydrolysis is carried out at the boiling point of the alcohol.

4. A method as claimed in any one of the preceding claims wherein a substantially stoichiometric amount of water is used for the hydrolysis.

5. A method as claimed in any one of the preceding claims wherein water is added to effect the hydrolysis in the form of a solution in an alcohol having 1 to 3 carbon atoms.

6. A method as claimed in any one of the preceding claims wherein prior to the heating step the precipitate is dried at a temperature not exceeding 120°C.

7. A method as claimed in any one of the preceding claims wherein in the heating step the precipitate is heated at a temperature in the range 700 to 1200°C.

**Patentansprüche**

1. Verfahren zum Herstellen von feinem Spinellpulver durch (i) Auflösen von einem Mol Magnesiumalkoxid der allgemeinen Formel

$$Mg(OR)_2$$

worin R eine Alkylgruppe mit 1 bis 3 Kohlenstoffatomen ist, und 2 bis 3 Molen Aluminiumalkoxid der allgemeinen Formel

$$Al(OR')_3$$

worin R' eine Alkylgruppe mit 1 bis 3 Kohlenstoffatomen ist, in einem Alkohol der allgemeinen Formel

$$R''OH$$

worin R'' eine Alkylgruppe mit 1 bis 3 Kohlenstoffatomen ist, wobei die Summe der in dem Alkohol gelösten Konzentrationen von Aluminiumalkoxid und Magnesiumalkoxid nicht größer als 0,2 Mol/l ist, (ii) Hydrolisieren der so erhaltenen Lösung und (iii) Erhitzen des durch die Hydrolyse gebildeten Niederschlages zur Bildung eines feinen Pulvers, das aus einer festen spinellartigen Lösung der Oxide von Aluminium und Magnesium besteht.

2. Verfahren nach Anspruch 1, bei dem die Hydrolyse in Gegenwart von LiF ausgeführt wird.

3. Verfahren nach Anspruch 1 oder 2, wobei die Hydrolyse beim Siedepunkt des Alkohols ausgeführt wird.

4. Verfahren nach irgendeinem der vorhergehenden Ansprüche, wobei eine im wesentlichen stöchiometrische Wassermenge für die Hydrolyse benutzt wird.

5. Verfahren nach irgendeinem der vorhergehenden Ansprüche, wobei für die Ausführung der Hydrolyse Wasser in Form einer Lösung in einem Alkohol mit 1 bis 3 Kohlenstoffatomen hinzugegeben wird.

6. Verfahren nach irgendeinem der vorhergehenden Ansprüche, wobei vor der Erhitzungsstufe der Niederschlag bei einer Temperatur getrocknet wird, die 120°C nicht übersteigt.

7. Verfahren nach irgendeinem der vorhergehenden Ansprüche, wobei der Niederschlag bei der Erhitzungsstufe auf eine Temperatur im Bereich von 700—1200°C erhitzt wird.

**Revendications**

1. Procédé de préparation de spinelle en poudre fine qui consiste (i) à dissoudre 1 mole d'alcoolate de magnésium donné par la formule générale,

$Mg(OR)_2$

où R est un groupe alcoyle ayant 1 à 3 atomes de carbone, et 2 à 3 moles d'alcoolate d'aluminium donné par la formule générale

$Al(OR')_3$

où R' est un groupe alcoyle ayant 1 à 3 atomes de carbone, dans un alcool donné par la formule générale

$R''OH$

où R'' est un groupe alcoyle ayant 1 à 3 atomes de carbone, la somme des concentrations de l'alcoolate d'aluminium et de l'alcoolate de magnésium dissous dans l'alcool n'étant pas supérieure à 0,2 mole/l, (ii) à soumettre la solution obtenue à une hydrolyse et (iii) à chauffer le précipité formé par l'hydrolyse pour former une poudre fine consistent en une solution solide de spinnelle d'oxydes d'aluminium et de magnésium.

2. Procédé selon la revendication 1 où l'hydrolyse est effectuée en présence de LiF.

3. Procédé selon l'une quelconque des revendications 1 à 3 où l'hydrolyse est effectuée au point d'ébullition de l'alcool.

4. Procédé selon l'une quelconque des revendications précédentes où l'on utilise, pour l'hydrolyse, une quantité sensiblement stoechiométrique d'eau.

5. Procédé selon l'une quelconque des revendications précédentes où l'eau est ajoutée pour effectuer l'hydrolyse sous la forme d'une solution dans un alcool ayant 1 à 3 atomes de carbone.

6. Procédé selon l'une quelconque des revendications précédentes dù avant l'étape de chauffage, le précipité est séché à une température ne dépassant pas 120°C.

7. Procédé selon l'une quelconque des revendications précédentes où à l'étape de chauffage, le précipité est chauffé à une température dans la gamme de 700 à 1200°C.